# EUROPEAN PATENT SPECIFICATION

(11) **EP 3 260 746 B1**
(45) Date of publication and mention of the grant of the patent: **23.10.2019**
(21) Application number: 16176056.6
(22) Date of filing: 23.06.2016
(51) Int. Cl.: F16K 11/083

(54) **FLOW CONTROL VALVE**
DURCHFLUSSREGELVENTIL
VANNE DE RÉGULATION D'ÉCOULEMENT

(43) Date of publication of application: 27.12.2017
(73) Proprietor: Eaton Intelligent Power Limited, Dublin 4 (IE); AUDI AG, 85045 Ingolstadt (DE)
(72) Inventor: Janocha, Marc, 66763 Dillingen (DE); Haribi, Bechir, 7003 Bizerte (TN); Cecrle, Jiri, 161 00 Praha (CZ); Kolar, Mario, 67300 Schiltigheim (FR); Herrmann, Tobias, 85049 Ingolstadt (DE); Krost, Jonathan, 85055 Ingolstadt (DE)
(74) Representative: Eaton IP Group EMEA

(56) References cited:
- SE-C1- 91 447
- US-A- 987 939
- US-A- 2 145 132
- US-A- 2 737 976
- US-A- 2 868 176

## Description

The invention refers to an automobile air-conditioning system having a refrigerant circuit controlled by a flow control valve, the valve comprising a housing forming internal passages and an internal cavity in fluid communication with each of the internal passages; and a flow direction block disposed in the internal cavity, the flow direction block having an outer sealing face acting sealingly together with an inner sealing face of the internal cavity, wherein the flow direction block comprises two clearances extending through a portion of the flow direction block, wherein each of the two clearances is adapted to selectively connect one pair of the internal passages of the housing when the flow direction block is rotated around a rotation axis relative to the housing, thus forming a first flow passage and a second flow passage.

A conventional four-way valve is adapted to accommodate two inlet flows and provide two outlet flows, and can be used where it is desired to switch or alternate the fluid flows to be fed to different parts of a fluid system. By way of example, a fluid flow system might utilize different fluids and, periodically, it is desired to switch or change the fluids which are to be fed into different flow paths of the system. A single valve can switch a pair of inlets and outlets to change the relationships of the inlets and outlets. In EP 1 811 215 B1, for example, there is disclosed a valve wherein the position of a ball closure determines the communicating relationships of the inlets and outlets. By rotating the ball closure, the inlets are selectively placed in communication with the respective outlets. The ball closure for the four-way valve includes two bores to provide two flow paths between the inlets and outlets. One of the problems with such a prior art valve is that by rotating the ball closure, the four-way valve is switched but cannot be controlled in regard of the flow through one of the flow paths, which makes an additional control valve necessary if such a flow control is desired.

Documents US 2 737 976 A, US 2 868 176 A, SE 91 447 C1, US 987 939 A and US 2 145 132 A each disclose a four-way valve allowing a flow through a first flow passage to be controlled independently of a flow through a second flow passage by way of rotating a flow direction block.

It is an objective of the invention to provide an autombile air-conditioning system having a refrigerant circuit controlled by a multi-way valve with a rotary flow direction block, which is flow controlled with respect to at least one flow path.

The objective is achieved by the automobile air-conditioning system of claim 1. The dependent claims refer to preferred embodiments.

The flow control valve according to the invention comprises a housing forming a number of internal passages and an internal cavity in fluid communication with each of the internal passages; further a flow direction block disposed in the internal cavity, the flow direction block having an outer sealing face acting sealingly together with an inner sealing face of the internal cavity, wherein the flow direction block comprises two clearances extending through a portion of the flow direction block, wherein each of the two clearances is adapted to selectively connect one pair of the internal passages of the housing when the flow direction block is rotated around a rotation axis relative to the housing, thus forming a first flow passage and a second flow passage. It is understood by a person skilled in the art that the flow direction block is formed as a solid of revolution and that the internal cavity is formed complementary to provide the inner sealing face and to allow the rotation of the flow direction block. The solid of revolution may be in the form of a sphere, a spheroid, a cylinder or a cone, for example, whereas other geometries may be applicable as well.

According to the invention, the two clearances are adapted to allow a flow through the first flow passage to be controlled independently of a flow through the second flow passage by way of rotating the flow direction block. Advantageously, the multi-way valve provides a flow control of one of the two flow passages. It is understood by a person skilled in the art that any one of the two flow passages can be controlled, while the other one remains constant. Therefore, the flow control feature is not restricted to a dedicated one of the two clearances, but only one flow passage is controlled at a time. Rotating the flow direction block means, in the sense of the invention, that the flow direction block is rotated from one angular position to another, which angular positions are distanced by only a fraction of a full circle. Rotating the flow direction block through a full circle, once or more, will have no effect, as the flow direction block is back at its starting position after each full circle.

According to a preferred embodiment, each of the internal passages has an orifice to the internal cavity, wherein a coverage of the clearance forming the first flow passage with at least one of the respective orifices is variable by rotating the flow direction block, while a coverage of the clearance forming the second flow passage with the respective orifices remains constant. For example, the flow through the first flow passage is controlled in a range between zero to 100 percent, while the flow through the second flow passage is constantly at 100 percent. Further, the flow through the first flow passage is controlled in a range between zero to 100 percent, while the flow through the second flow passage is constantly zero, provided that the allocation of the orifices to the flow passages has changed in respect to the first example. It is understood by a person skilled in the art that the designation of first and second flow passages are relative and do not define a certain allocation of orifices to the respective flow passages. That means, one of the first and second flow passages is controlled as described, while the respective other flow passage remains constant.

According to another preferred embodiment, at least one of the clearances is formed as an open channel into the outer sealing face of the flow direction block. More preferably, both clearances are formed as an open channel into the outer sealing face of the flow direction block. The clearances are thus not formed as bores through the flow direction block, which advantageously allows for an increased margin with regard to the coverage of the respective orifices by the clearances. A further advantage of the clearances formed as open channels is a possible reduction in size of the flow direction block, compared to a ball closure, for example, which accommodates two bores. In addition, due to the smaller size of the flow direction block, the torque required to rotate the flow direction block is also reduced, and an actuator of the valve may therefore be smaller sized and still be able to overcome the torque.

Thus, with at least one clearance formed as an open channel, particularly, at least one of the first flow passage and the second flow passage is formed by the clearance and a part of the inner sealing face, cooperatively. More preferably, both flow passages are formed by the respective clearance and a respective part of the inner sealing face, cooperatively. It is an advantage of these preferred embodiments that the respective flow passage is at least comparably as wide as the internal passages are and thus only a minimal pressure drop is incurred in the flow through the respective flow passage.

According to another preferred embodiment, each of the clearances is formed along a straight axis, which means the bottom line of the channel is straight, not curved. In a transversal section through the flow direction block, perpendicular to the rotational axis, the clearances have the form of a segment of a circle. More preferable, the axes of the clearances, or the secants forming the segments of the circle, are running in angled formation to each other in a common plane. Furthermore, preferably the transversal section through the flow direction block is not mirror symmetric, which means that one of the clearances forms a segment of a circle with a greater surface area than the other clearance.

Described in other words, preferably a central part of the flow direction block separating the clearances, is formed as a wedge, in a transverse section perpendicular to the rotation axis, in particular as an asymmetrical wedge.

According to another preferred embodiment, the flow direction block is tapered along the rotation axis. The flow direction block is thus formed as a cone, in particular as a right circular cone, as the flow direction block is necessarily a solid of revolution, and more particular as a frustum of a cone.

It is an advantage of the tapered flow direction block that it provides a more reliable and durable seating arrangement than, for example, a ball closure. The seat further provides advantageous sealing properties, so that there is no leakage or at least minimal leakage between the outer sealing face of the flow direction block and the inner sealing face of the internal cavity, and that the flow passes only through the flow passages without bypassing the flow direction block.

According to yet another preferred embodiment, the flow direction block is preloaded against the inner sealing face of the internal cavity. Thus, the sealing properties of the tapered flow direction block is advantageously further optimized. The sealing even has self-repairing properties. Unlike the ball closure, for example, the seat of which can wear, causing leakage between the seat and the ball closure, by moving over the seat as it is being moved to different positions, the preloaded tapered flow direction block will over time ablate any small irregularities of the sealing faces. This is particularly advantageous if the valve application calls for the valve to be repeatedly switched over a long lifetime. Thus, the outer sealing face of the flow direction block and the inner sealing face of the internal cavity do not necessarily need a special surface treatment in order to sealingly act together.

It is an advantage of the flow control valve according to the invention that an absolute position of the flow direction block is easily detectable. Therefore, according to yet another preferred embodiment, a position sensor is arranged in order to provide information on the position of the flow direction block. The flow direction block is preferably fitted with a bar magnet arranged perpendicular to the axis of rotation, the magnetic field being detected by the sensor, which is preferably arranged in a corresponding position on the housing.

The internal passages of the housing may generally be arranged in a common plane, particularly in a plane which is perpendicular to the rotation axis of the flow direction block. Preferably, the internal passages of the housing are arranged in parallel planes, which planes are particularly perpendicular to the rotation axis of the flow direction block, and wherein two or more of the planes may form a common plane.

According to yet another preferred embodiment, each of the internal passages has an orifice open to the internal cavity, wherein a first orifice is arranged diametrically with respect to a second orifice, and wherein a third orifice and a fourth orifice are each arranged at an angular distance of less than 90° from the second orifice, on opposite sides of the second orifice. This unbalanced arrangement of the orifices around the internal cavity advantageously allows, in combination with features of the flow direction block, to provide for the control of the flow through one of the flow passages, independently of the flow through the other flow passage. The third orifice and the fourth orifice are particularly preferred to be arranged at equal angular distances from the second orifice. Furthermore, according to another preferred embodiment, at least one of the orifices is different to the other orifices with regard to a diameter of the orifices. Depending on the application, the diameter of the orifices, or rather a ratio of the diameters of the orifices may advantageously be adapted to match the specifications according to the application of the valve.

The flow control valve according to the invention is advantageously useful in a variety of different applications, including stationary and mobile systems, with different fluids, like hydraulic oil, refrigerant or water, and also with different phases of such fluids.

According to the invention, each of the passages is in fluid communication with a respective port, a first port in connection with a suction line of a compressor, a second port in connection with an output line of the compressor, a third port in connection with a first heat exchanger and a fourth port in connection with a second heat exchanger. The first and second heat exchangers are preferably connected via an expansion valve, closing the refrigerant circuit loop. The compressed refrigerant may either be directed to the first heat exchanger, returning via the expansion valve and the second heat exchanger to the suction line of the compressor, or the compressed refrigerant may be directed to the second heat exchanger, returning via the expansion valve and the first heat exchanger to the suction line of the compressor. Placing the first heat exchanger inside a conditioned space and the second heat exchanger outside, i.e. in an external environment, the refrigerant circuit may advantageously be switched between a heat pump operation and a cooling operation. According to the invention, the refrigerant circuit is used in an autombile air-conditioning system.

The invention will now be described with respect to preferred embodiments. By describing the embodiments in detail, no limitation is made to restrict the full scope of the invention, but a more complete appreciation of the invention and many of the attendant advantages will become apparent, particularly when read in conjunction with the accompanying drawings in which:
Figure 1 shows an exploded assembly drawing of an embodiment of a flow control valve according to the invention, with a driving assembly;
Figure 2 shows a sectional view of the assembled embodiment of Figure 1;
Figure 3 shows a schematic sectional view of a first variation of the embodiment of Figure 2;
Figure 4 shows a schematic sectional view of a second variation of the embodiment of Figure 2;
Figure 5 shows a schematic illustration of a transverse section through a flow direction block and a housing of the embodiment of Figure 1; and
Figures 6a to 6h show schematic illustrations of a transverse section through a flow direction block and a housing of another embodiment of the flow control valve according to the invention, with the flow direction block in six exemplary functional positions.

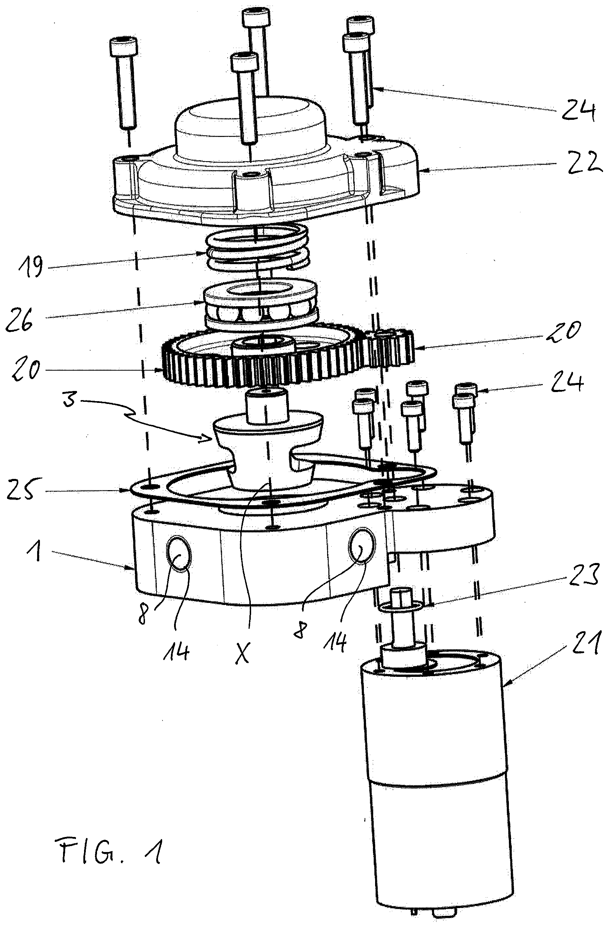

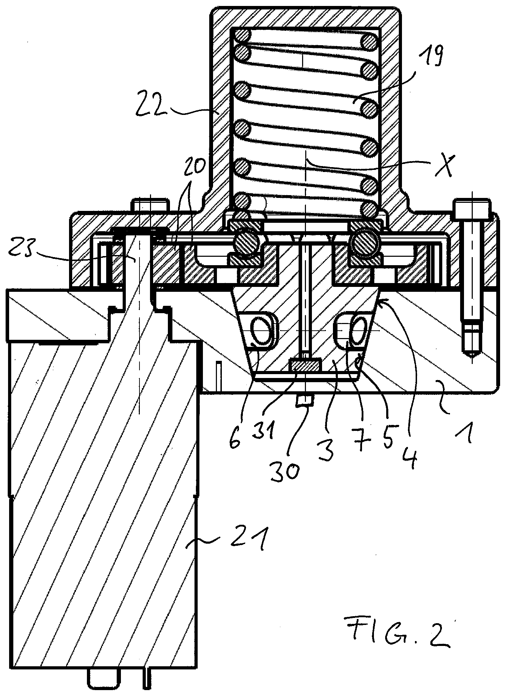

The Figures 1 and 2, which show different views of a preferred embodiment of a flow control valve according to the invention are described together. The flow control valve according to the invention comprises a housing 1 forming four internal passages 8 and an internal cavity 2 in fluid communication with each of the four internal passages 8. A flow direction block 3 disposed in the internal cavity 2, the flow direction block 3 having an outer sealing face 4 acting sealingly together with an inner sealing face 5 of the internal cavity 2, wherein the flow direction block 3 comprises two clearances 6, 7 extending through a portion of the flow direction block 3, wherein each of the two clearances 6, 7 is adapted to selectively connect one pair of the four internal passages 8 of the housing 1 when the flow direction block 3 is rotated around a rotation axis X relative to the housing 1, thus forming a first flow passage and a second flow passage. According to the invention, the two clearances 6, 7 are adapted to allow a flow through the first flow passage to be controlled independently of a flow through the second flow passage by way of rotating the flow direction block 3.

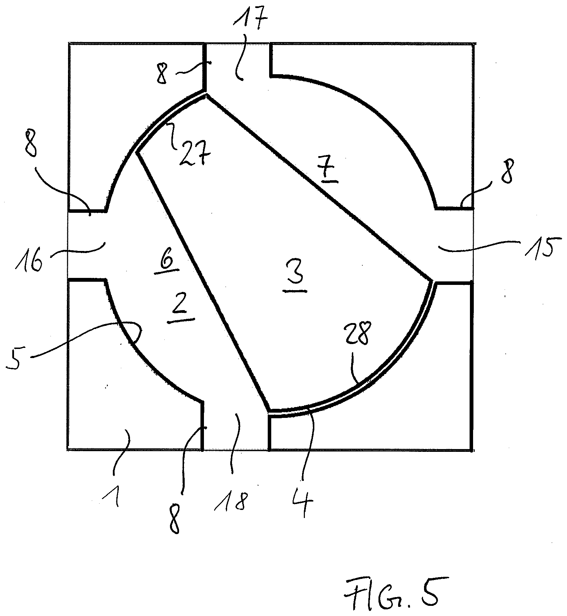

The four internal passages 8 are connected to four ports 14, which are used as inlets and/or outlets connected to an external system (not depicted) that is providing a flow of a liquid or a gas under a certain pressure and temperature to each of the two flow passages. The inner part 3 or flow direction block 3 has the form of a conical puck, which is rotated about the rotational axis X. Depending on the rotation angle, the desired pairs of the internal passages 8 and thus of the inlet and outlet ports 14 will be connected due to positioning the clearances 6, 7 in the form of grooves of the inner flow restrictor 3 or flow direction block 3 over orifices 15-18 (cf. Figure 5), the openings of the internal passages 8 into the internal cavity 2 of the outer valve body 1 or housing 1. Basically, by rotating the flow direction block 3, different functionalities and connections are enabled with the possibility of having a variable flow on one of the flow passages.

A spring 19 is constantly pressing the flow direction block 3 in the form of a conical puck towards a bottom or closed end of the internal cavity 2 with a calculated force in order to maintain the best surface to surface contact between the outer sealing face 4 of the conical puck 3 and the inner sealing face 5 at the inside area or internal cavity 2 of the outer valve body 1 or housing 1. A ball bearing 26 is provided between the spring 19 and the flow direction block 3 to allow the rotation of the flow direction block 3 relative to the spring 19. A set of gears 20 are provided in order to amplify a torque provided by a motor 21 to the conical puck 3 and simplify the assembling relatively to the rotational axis X alignment. In addition to the torque amplification the gears 20 serve a further purpose in allowing for small upwards or downwards movement of the flow direction block 3 as well as slight bending of the inner plug. To achieve this, an engine shaft 23 of the motor 21 is arranged in parallel with respect to the rotational axis X of the flow direction block 3 and the set of gears 20 are capable of compensating for axial displacements.

Several benefits can be achieved using each of the characteristics of the design. In fact, having the rotational aspect of the internal part 3 or flow direction block 3 in compact dimensions makes the flow paths inside the valve very short but wide, therefore a pressure drop is extremely small. Also, a current state of the valve can be determined from the angle of rotation which makes it simpler to add a feedback reading on the state of the system as the rotation can easily be measured.

Adding to the rotational aspect of the internal part 3, the conical shape has further advantages. With the help of the pre-loaded spring 19, the contact pressure can be controlled which leads consequently to an internal leakage control. In addition to that, due to the conical shape of the flow direction block 3, wear, unequal thermal deformation and manufacturing tolerance issues are compensated by upwards or downwards movement of the conical puck 3. Following on the same idea, small irregularities in the contact surfaces 4, 5 will be ablated over time which gives a reliable self-repairing sealing over a high number of cycles. The duo conical shape of the outer sealing face 4 and the inner sealing face 5 and the spring 19 makes it also possible to hold the position of the valve without external power input due to the contact pressure and the resulting friction. Also, with this shape, the sealing is realized by contact of the two bodies as mentioned before, which means that no separate sealing will be required and due to the calculated angle of the cone, the internal part 3 will not get stuck over its lifetime. Finally, one more advantage induced by the conical puck 3 is that in case of leakage into the cap 22 occurs, the pressure in the cap 22 rises and the contact pressure between the valve body 1 and the flow restrictor 3 increases, which leads automatically to an improved sealing in the sense of a self-sealing mechanism.

Furthermore, a position sensor 30 is arranged in order to provide information on the position of the flow direction block 3. The flow direction block 3 is therefore fitted with a bar magnet 31 arranged perpendicular to the axis X of rotation, the magnetic field being detected by the sensor 30, which is arranged on the outside of the valve body 1. Other constructional elements, such as fastening means 24 and a gasket 25 are well known to a person skilled in the art and will thus not be referred to in detail.

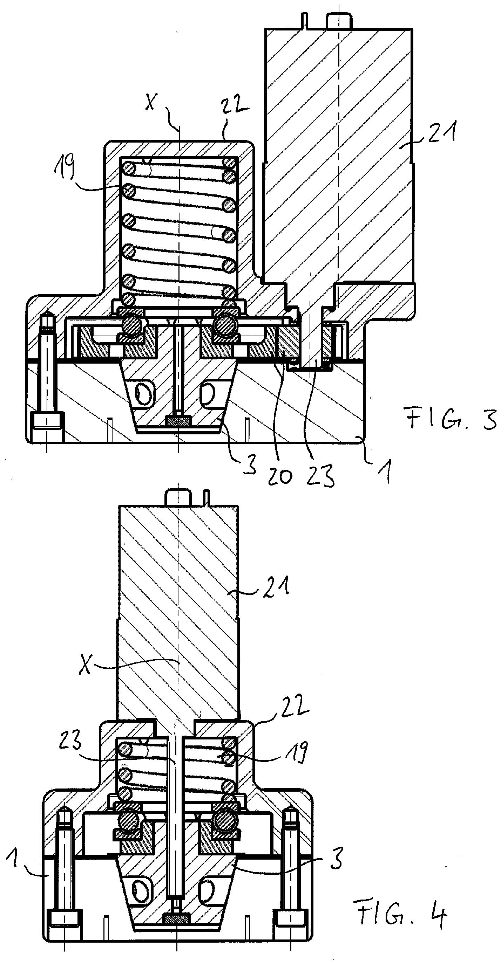

With respect to Figures 3 and 4, which each show a schematic sectional view of a variation of the embodiment of Figure 2, two more embodiments of the flow control valve are described. These embodiments differ from the first described embodiment particularly by the position of the motor 21, relative to the valve body 1 and the flow direction block 3. In the embodiment of Figure 3, with the engine shaft 23 of the motor 21 also being arranged in parallel with respect to the rotational axis X of the flow direction block 3, the gears 20 are able to compensate for axial displacements caused by the flow direction block 3. However, the motor 21 is not arranged opposite to the spring 19 with respect to the valve body 1, as in the embodiment of Figure 2, but adjacent to the spring 19 on the same side of the valve body 1. Figure 4 shows a further embodiment, wherein the motor 21 is arranged on the cap 22 and thus with the engine shaft 23 coaxially aligned to the spring 19 and the rotational axis X of the flow direction block 3. This arrangement is advantageously simple, as no gears are necessary. For compensating axial displacement of the flow direction block 3, however, a respective clutch (not shown) between the motor 21 and the flow direction block 3 would be needed.

In addition, a geometry of the flow direction block 3 is important to consider and will be addressed with respect to Figure 5, which shows a schematic illustration of a section through the flow direction block 3 and a housing 1, transverse in respect to the rotational axis X of Figure 1. The internal passages 8 and the first, second, third and fourth orifices 15-18 may be located in a common plane, as depicted, but may also be arranged in parallel planes. Further, the orifices 15-18 are equal in diameter in this embodiment, which is not necessarily the case. The flow control valve according to the invention can be considered bidirectional as the flow direction on both connected circuits (not shown) does neither affect the pressure drop nor the leakage. The clearances or grooves 6, 7 in the flow restrictor 3 are formed in a way, that the leftover material equals the size of the orifices 15-18, on a first side 27, while the other second side 28 is three times bigger in this embodiment. This specific geometry allows the switching of the flow direction without overlap, as well as the control of the flow of one of the paths continuously from zero to 100 percent without affecting the other flow. Finally, the position of the orifices 15-18 in the internal cavity 2 of the valve body 1 is not evenly distributed. Each of the four internal passages 8 has an orifice 15-18 open to the internal cavity 2, wherein a first orifice 15 is arranged diametrically with respect to a second orifice 16, and wherein a third orifice 17 and a fourth orifice 18 are each arranged at an angular distance of less than 90° from the second orifice 16, on opposite sides of the second orifice 16. This special arrangement of the orifices 15-18 is chosen to advantageously minimize a circumference of the rotating flow control block 3, thus also minimizing the size of the internal cavity 2, in which the flow restrictor 3 is situated.

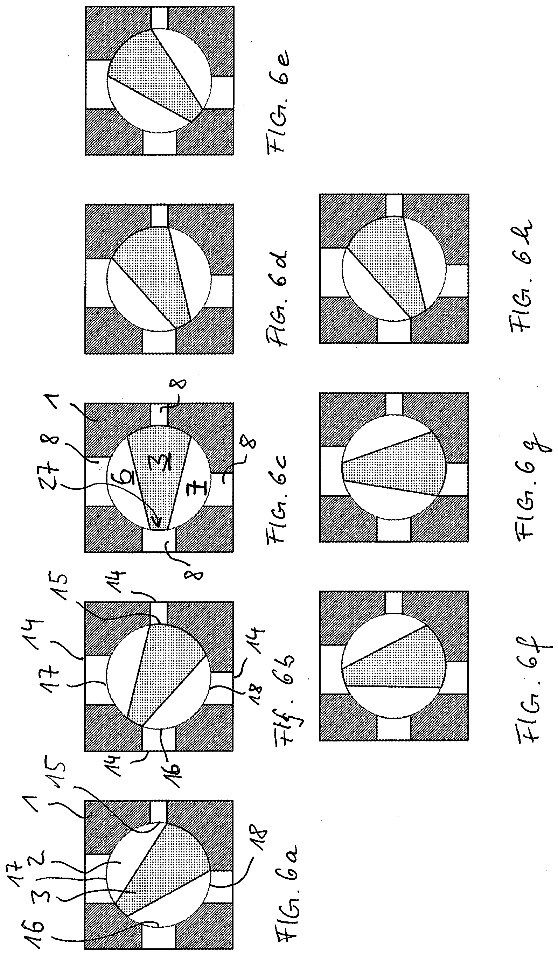

The Figures 6a to 6h show schematic illustrations of a section through a flow direction block 3 and a valve body 1 of another embodiment of the flow control valve according to the invention, with the flow direction block 3 being depicted in six exemplary functional positions. The parts shown in Figures 6a to 6h are identical, and therefore are not provided with reference signs throughout all Figures 6a to 6h. As only the position of the flow direction block 3 changes, the functional states will be understood without reference numerals, as well. First, however, the special features of the embodiment are referred to, before the functional states are further elucidated. According to the embodiment, the four internal passages 8 of the housing 1 are arranged in two parallel planes perpendicular to the rotation axis of the flow direction block 3, wherein the internal passages 8 of the second, third and fourth orifices 16, 17, 18 are arranged in a common plane and the internal passage 8 of the first orifice 15 is arranged in a different plane. The first orifice 15 is further arranged diametrically with respect to the second orifice 16, and the third orifice 17 and the fourth orifice 18 are each arranged at an angular distance of less than 90° from the second orifice 16, on opposite sides of the second orifice 16. Furthermore, according to this embodiment, the orifices 15-18 are different with regard to their diameters. Depending on the application, the diameter of the orifices, or rather a ratio of the diameters of the orifices 15-18 may advantageously be adapted to match the specifications according to the application of the valve. Further, the clearances or grooves 6, 7 in the flow restrictor 3 are formed in a way, that the leftover material is less than the size of the second, third and fourth orifices 16, 17, 18 on the first side 27. This specific geometry allows the switching of the flow direction with overlap, which advantageously avoids a harmful build-up of high pressure during switching operations, which could result from fully closing the orifice 16, if the respective port 14 is connected to a compressor outlet.

The flow control valve according to the invention is advantageously useful in a variety of different applications, including stationary and mobile systems, with different fluids, like hydraulic oil, refrigerant or water, and also with different phases of such fluids. An application of the flow control valve is in an automobile air-conditioning system comprising a heat pump and a cooling mode. The port 14 of the second orifice 16 is, for example, connected to a compressor (not shown) and the port 14 of the first orifice 15 is connected to a return flow of the compressor, whereas the third orifice 17 is connected to a heat exchanger (not shown). The fourth orifice 18 is connected to an air-conditioning condenser. The positions of the flow control block 3 of the Figures 6a to 6e are typically used during normal operation of the air conditioning system, whereas the positions of the flow control block 3 of the Figures 6f, 6g and 6h will only be used for maintenance purposes.

Figure 6a shows the valve with a first flow connection from the compressor via the second orifice 16 to the fourth orifice 18, which provides a cooling air-condition operation, and with a second flow connection from the first orifice 15 to the third orifice 17, which is used for an extraction operation from the heat exchanger. In Figure 6b, the same cooling air-condition operation is provided, without the extraction operation from the heat exchanger, as only the first flow connection from the compressor via the second orifice 16 to the fourth orifice 18 is open. A transitional state of the flow direction block 3 is depicted in Figure 6c, through which the flow direction block 3 is rotated during a switching operation from the cooling air-condition operation to a heat-pump operation, as shown in Figure 6d, and back. It is noted, that a flow is not completely stopped during the switching operation, as the the clearances or grooves 6, 7 in the flow restrictor 3 are formed in a way, that the leftover material is less than the size of the second orifice 16 on the first side 27, thus allowing the switching of the flow direction with overlap. In

Figure 6d, the first flow connection is provided from the compressor via the second orifice 16 to the third orifice 17, resulting in a single heat-pump operation. In Figure 6e, the flow direction block 3 is rotated a few degrees further in counter-clockwise direction, in order to open a second flow from the fourth orifice 18 to the first orifice 15 for an extraction operation from the condenser of the air-condition, while the first flow still provides the heat-pump operation.

In Figure 6f, a first maintenance position of the flow direction block 3 is shown, wherein all four orifices 15-18 are open, and which is advantageously used for filling or evacuating the system. Figures 6g and 6h, each show a position of the flow direction block 3 for a purging operation, connecting the first, second and third orifice 15, 16, 17 in Fig 6g, and connecting the second and third orifice 16, 17 in Figure 6h, the latter position being used identically for the purging operation and for the heat-pump operation shown in Figure 6d.

### Reference Numerals

- 1: Housing, valve body
- 2: Internal cavity
- 3: Flow direction block
- 4: Outer sealing face
- 5: Inner sealing face
- 6: Clearance
- 7: Clearance
- 8: Internal passages
- 14: Ports, inlet, outlet
- 15: First orifice
- 16: Second orifice
- 17: Third orifice
- 18: Fourth orifice
- 19: Spring
- 20: Gears
- 21: Motor
- 22: Cap
- 23: Engine shaft
- 24: Fastening means
- 25: Gasket
- 26: Ball bearing
- 27: First side of the flow direction block
- 28: Second side of the flow direction block
- 30: Position sensor
- 31: Bar magnet
- X: Axis

## Claims

1. Automobile air-conditioning system having a refrigerant circuit controlled by a flow control valve, wherein the flow control valve comprises a housing (1) forming a number of internal passages (8) and an internal cavity (2) in fluid communication with each of the internal passages;
a flow direction block (3) disposed in the internal cavity, the flow direction block having an outer sealing face (4) acting sealingly together with an inner sealing face (5) of the internal cavity, wherein the flow direction block comprises two clearances (6, 7) extending through a portion of the flow direction block, wherein each of the two clearances is adapted to selectively connect one pair of the internal passages of the housing when the flow direction block is rotated around a rotation axis (X) relative to the housing, thus forming a first flow passage and a second flow passage, wherein the two clearances are adapted to allow a flow through the first flow passage to be controlled independently of a flow through the second flow passage by way of rotating the flow direction block, wherein each of the passages is in fluid communication with a respective port, a first port in connection with a suction line of a compressor, a second port in connection with an output line of the compressor, a third port in connection with a first heat exchanger and a fourth port in connection with a second heat exchanger.

2. System according to claim 1, wherein each of the internal passages (8) has an orifice (15, 16, 17, 18) to the internal cavity (2), wherein a coverage of the clearance (6, 7) forming the first flow passage with at least one of the respective orifices is variable by rotating the flow direction block, while a coverage of the clearance (7, 6) forming the second flow passage with the respective orifices remains constant.

3. System according to one of the preceding claims, wherein the flow through the first flow passage is controlled in a range between zero to 100 percent, while the flow through the second flow passage is constantly at 100 percent.

4. System according to any one of the preceding claims, wherein the flow through the first flow passage is controlled in a range between zero to 100 percent, while the flow through the second flow passage is constantly zero.

5. System according to any one of the preceding claims, wherein at least one of the clearances (6, 7) is formed as an open channel into the outer sealing face (4) of the flow direction block (3).

6. System according to any one of the preceding claims, wherein at least one of the first flow passage and the second flow passage is formed by the clearance (6, 7) and the inner sealing face (5).

7. System according to any one of the preceding claims, wherein each of the clearances (6, 7) is formed along a straight axis, the axes of the clearances running in angled formation to each other in a common plane.

8. System according to any one of the preceding claims, wherein a central part of the flow direction block (3), separating the clearances (6, 7), in a transverse section with respect to the rotation axis (X), is formed as a wedge.

9. System according to any one of the preceding claims, wherein the flow direction block (3) is tapered along the rotation axis (X).

10. System according to any one of the preceding claims, wherein the flow direction block (3) is preloaded against the inner sealing face (5) of the internal cavity (2).

11. System according to any one of the preceding claims, wherein a position sensor (30) is arranged in order to provide information on the position of the flow direction block (3).

12. System according to any one of the preceding claims, wherein the internal passages (8) are arranged in parallel planes, perpendicular to the rotation axis (X) of the flow direction block (3).

13. System according to any one of the preceding claims, wherein each of the internal passages (8) has an orifice open to the internal cavity, wherein a first orifice (15) is arranged diametrically with respect to a second orifice (16), and wherein a third orifice (17) and a fourth orifice (18) are each arranged at an angular distance of less than 90° from the second orifice, on opposite sides of the second orifice.

14. System according to claim 13, wherein at least one of the orifices is different to the other orifices with regard to a diameter of the orifices.

## Patentansprüche

1. Kraftfahrzeugklimaanlage mit einem durch ein Strömungssteuerventil gesteuerten Kältemittelkreislauf, wobei das Strömungssteuerventil umfasst
ein Gehäuse (1), das eine Anzahl von Innendurchgängen (8) und einen Innenhohlraum (2) in Fluidverbindung mit jedem der Innendurchgänge bildet;
einen Strömungsrichtungsblock (3), der in dem Innenhohlraum angeordnet ist, wobei der Strömungsrichtungsblock eine äußere Dichtfläche (4) aufweist, die zusammen mit einer inneren Dichtfläche (5) des Innenhohlraums abdichtend wirkt, wobei der Strömungsrichtungsblock zwei Zwischenräume (6, 7) umfasst, die sich durch einen Abschnitt des Strömungsrichtungsblocks erstrecken, wobei jeder der beiden Zwischenräume angepasst ist, um selektiv ein Paar der Innendurchgänge des Gehäuses zu verbinden, wenn der Strömungsrichtungsblock um eine Drehachse (X) relativ zum Gehäuse gedreht wird, wodurch ein erster Strömungsdurchgang und ein zweiter Strömungsdurchgang gebildet werden, wobei die beiden Zwischenräume so angepasst sind, dass ein Strom durch den ersten Strömungsdurchgang unabhängig von einem Strom durch den zweiten Strömungsdurchgang durch Drehen des Strömungsrichtungsblocks gesteuert werden kann, wobei jeder der Kanäle in Fluidverbindung mit einem jeweiligen Anschluss, einem ersten Anschluss in Verbindung mit einer Saugleitung eines Verdichters, einem zweiten Anschluss in Verbindung mit einer Ausgangsleitung des Verdichters, einem dritten Anschluss in Verbindung mit einem ersten Wärmetauscher und einem vierten Anschluss in Verbindung mit einem zweiten Wärmetauscher steht.

2. System nach Anspruch 1, wobei jeder der Innendurchgänge (8) eine Öffnung (15, 16, 17, 18) zum Innenhohlraum (2) aufweist, wobei eine Abdeckung des Zwischenraums (6, 7), der den ersten Strömungsdurchgang mit mindestens einer der jeweiligen Öffnungen bildet, durch Drehen des Strömungsrichtungsblocks variabel ist, während eine Abdeckung des Zwischenraums (7, 6), der den zweiten Strömungsdurchgang mit den jeweiligen Öffnungen bildet, konstant bleibt.

3. System nach einem der vorstehenden Ansprüche, wobei der Strom durch den ersten Strömungsdurchgang in einem Bereich zwischen Null und 100 Prozent gesteuert wird, während der Strom durch den zweiten Strömungsdurchgang konstant bei 100 Prozent liegt.

4. System nach einem der vorstehenden Ansprüche, wobei der Strom durch den ersten Strömungsdurchgang in einem Bereich zwischen null und 100 Prozent gesteuert wird, während der Strom durch den zweiten Strömungsdurchgang konstant bei null liegt.

5. System nach einem der vorstehenden Ansprüche, wobei mindestens einer der Zwischenräume (6, 7) als ein offener Kanal in die äußere Dichtfläche (4) des Strömungsrichtungsblocks (3) hinein ausgebildet ist.

6. System nach einem der vorstehenden Ansprüche, wobei mindestens einer der ersten Strömungsdurchgänge und der zweite Strömungsdurchgang durch den Zwischenraum (6, 7) und die innere Dichtfläche (5) ausgebildet wird.

7. System nach einem der vorstehenden Ansprüche, wobei jeder der Zwischenräume (6, 7) entlang einer geraden Achse ausgebildet ist, wobei die Achsen der Zwischenräume in einer gemeinsamen Ebene in Winkelformation zueinander verlaufen.

8. System nach einem der vorstehenden Ansprüche, wobei ein Mittelteil des Strömungsrichtungsblocks (3), der die Zwischenräume (6, 7) in einem Querschnitt in Bezug auf die Drehachse (X) trennt, als Keil ausgebildet ist.

9. System nach einem der vorstehenden Ansprüche, wobei sich der Strömungsrichtungsblock (3) entlang der Drehachse (X) verjüngt.

10. System nach einem der vorstehenden Ansprüche, wobei der Strömungsrichtungsblock (3) gegen die innere Dichtfläche (5) des Innenhohlraums (2) vorgespannt ist.

11. System nach einem der vorstehenden Ansprüche, wobei ein Positionssensor (30) angeordnet ist, um Informationen über die Position des Strömungsrichtungsblocks (3) bereitzustellen.

12. System nach einem der vorstehenden Ansprüche, wobei die Innendurchgänge (8) in parallelen Ebenen senkrecht zur Drehachse (X) des Strömungsrichtungsblocks (3) angeordnet sind.

13. System nach einem der vorstehenden Ansprüche, wobei jeder der Innendurchgänge (8) eine zum Innenhohlraum offene Öffnung aufweist, wobei eine erste Öffnung (15) in Bezug auf eine zweite Öffnung (16) diametral angeordnet ist, und wobei eine dritte Öffnung (17) und eine vierte Öffnung (18) jeweils in einem Winkelabstand von weniger als 90° von der zweiten Öffnung auf gegenüberliegenden Seiten der zweiten Öffnung angeordnet sind.

14. System nach Anspruch 13, wobei sich mindestens eine der Öffnungen in Bezug auf einen Durchmesser der Öffnungen von den anderen Öffnungen unterscheidet.

## Revendications

1. Système de climatisation d'automobile ayant un circuit réfrigérant commandé par une soupape de contrôle de flux, dans lequel la soupape de contrôle de flux comprend
un boîtier (1) formant plusieurs passages internes (8) et une cavité interne (2) en communication fluidique avec chacun des passages internes ;
un bloc de direction de flux (3) disposé dans la cavité interne, le bloc de direction de flux ayant une face d'étanchéité externe (4) fournissant une étanchéité conjointement avec une face d'étanchéité interne (5) de la cavité interne, dans lequel le bloc de direction de flux comprend deux espaces (6, 7) s'étendant à travers une partie du bloc de direction de flux, dans lequel chacun des deux espaces est conçu pour relier sélectivement une paire des passages internes du boîtier lorsque le bloc de direction de flux tourne autour d'un axe de rotation (X) par rapport au boîtier, formant ainsi un premier passage de flux et un second passage de flux, dans lequel les deux espaces sont conçus pour permettre à un flux à travers le premier passage de flux d'être commandé de façon indépendante d'un flux à travers le second passage de flux au moyen de la rotation du bloc de direction de flux, dans lequel chacun des passages est en communication fluidique avec un port respectif, un premier port en liaison avec une ligne d'aspiration d'un compresseur, un deuxième port en liaison avec une ligne de sortie du compresseur, un troisième port en liaison avec un premier échangeur de chaleur et un quatrième port en liaison avec un second échangeur de chaleur.

2. Système selon la revendication 1, dans lequel chacun des passages internes (8) présente un orifice (15, 16, 17, 18) vers la cavité interne (2), dans lequel un recouvrement de l'espace (6, 7) formant le premier passage de flux avec au moins un des orifices respectifs est variable en tournant le bloc de direction de flux, tandis qu'un recouvrement de l'espace (7, 6) formant le second passage de flux avec les orifices respectifs reste constant.

3. Système selon l'une quelconque des revendications précédentes, dans lequel le flux à travers le premier passage de flux est commandé dans une plage comprise entre zéro et 100 %, tandis que le flux à travers le second passage de flux est constamment à 100 %.

4. Système selon l'une quelconque des revendications précédentes, dans lequel le flux à travers le premier passage de flux est commandé dans une plage comprise entre zéro et 100 %, tandis que le flux à travers le second passage de flux est constamment nul.

5. Système selon l'une quelconque des revendications précédentes, dans lequel au moins l'un des espaces (6, 7) est formé comme un canal ouvert dans la face d'étanchéité externe (4) du bloc de direction de flux (3).

6. Système selon l'une quelconque des revendications précédentes, dans lequel au moins un du premier passage de flux et du second passage de flux est formé par l'espace (6, 7) et la face d'étanchéité interne (5).

7. Système selon l'une quelconque des revendications précédentes, dans lequel chacun des espaces (6, 7) est formé le long d'un axe droit, les axes des espaces se rejoignant en formant un angle l'un par rapport à l'autre dans un plan commun.

8. Système selon l'une quelconque des revendications précédentes, dans lequel une partie centrale du bloc de direction de flux (3), séparant les espaces (6, 7), dans une section transversale par rapport à l'axe de rotation (X), a la forme d'une cale.

9. Système selon l'une quelconque des revendications précédentes, dans lequel le bloc de direction de flux (3) est effilé le long de l'axe de rotation (X).

10. Système selon l'une quelconque des revendications précédentes, dans lequel le bloc de direction de flux (3) est préchargé contre la face d'étanchéité interne (5) de la cavité interne (2).

11. Système selon l'une quelconque des revendications précédentes, dans lequel un capteur de position (30) est conçu pour fournir des informations sur la position du bloc de direction de flux (3).

12. Système selon l'une quelconque des revendications précédentes, dans lequel les passages internes (8) sont agencés en plans parallèles, perpendiculaires à l'axe de rotation (X) du bloc de direction de flux (3).

13. Système selon l'une quelconque des revendications précédentes, dans lequel chacun des passages internes (8) a un orifice ouvert dans la cavité interne, dans lequel un premier orifice (15) est agencé diamétralement par rapport à un deuxième orifice (16), et dans lequel un troisième orifice (17) et un quatrième orifice (18) sont chacun agencés à une distance angulaire inférieure à 90 °C depuis le deuxième orifice, sur des côtés opposés du deuxième orifice.

14. Système selon la revendication 13, dans lequel au moins l'un des orifices est différent des autres orifices en ce qui concerne un diamètre des orifices.
